(19) Europäisches Patentamt
European Patent Office
Office européen des brevets

(11) Publication number: **0 230 065 B1**

(12) # EUROPEAN PATENT SPECIFICATION

(45) Date of publication of patent specification: **30.10.91**

(51) Int. Cl.5: **C04B 28/02**, C04B 24/22, C04B 24/24, E21B 33/13

(21) Application number: **86202105.2**

(22) Date of filing: **27.11.86**

(54) **Additive for controlling fluid loss from well cement slurries, and corresponding cementing method.**

(30) Priority: **24.12.85 FR 8519276**

(43) Date of publication of application:
**29.07.87 Bulletin 87/31**

(45) Publication of the grant of the patent:
**30.10.91 Bulletin 91/44**

(84) Designated Contracting States:
**DE GB IT NL**

(56) References cited:
**FR-A- 2 540 098**
**FR-A- 2 570 071**

(73) Proprietor: **Etudes et Fabrication Dowell Schlumberger**
**Z.I. Molina BP 90**
**F-42003 Saint-Etienne Cédex 01(FR)**

(72) Inventor: **Kieffer, Jacques**
**26, rue Michel Rondet**
**F-42230 Roche la Molière(FR)**
Inventor: **Michaux, Michel**
**10, rue Virgile**
**F-42100 Saint Etienne(FR)**
Inventor: **Rae, Philip c/o Etudes et Fabrication Dowell Schlumberger Z.I. Molina, BP 90**
**F-42003 Saint Etienne, cedex 01(FR)**

(74) Representative: **Richebourg, Michel François**
**Etudes et Fabrication Dowell Schlumberger**
**Z.I. Molina La Chazotte B.P. 90**
**F-42003 Saint-Etienne Cédex 1(FR)**

EP 0 230 065 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to well cementing technology, and in particular to cementing oil wells or geothermal wells.

Developing highly effective slurries is difficult because of the wide variety of underground formations through which a well passes gives rise to severe pressure and temperature conditions, to rheological and setting time constraints, etc.

The consequences of poorly performed cementing (e.g imperfect slurry, or the slurry does not behave as expected, or the behaviour of the slurry is modified by a component present in one of the formations passed through) may be financially catastrophic, and may even lead to the well being lost.

One of the frequently encountered problems concerns fluid-loss control. One of the most important characteristics of a liquid slurry lies in its ability to avoid dehydration on coming into contact with permeable formations while being simultaneously subjected to a pressure greater than the pressure existing the pores of the formation. Under such conditions, the cement slurry is effectively "filtered" and leaves a filtration cake on the surface of the formation, with potentially harmful fluid passing from the cement into the matrix of the formation. Under such conditions, a cement slurry whose fluid loss characteristics are not reliably controlled may loose water to the formation. The effect of fluid loss from the slurry is to reduce its thickening time and to radically alter its fluid behavior.

In addition, under the most severe conditions, the filtration cake which is deposited on the formation may build up to such a thickness that fluid is prevented from passing beyond the permeable zone, thereby leading to incomplete placement of the cement slurry.

Under such conditions, a fluid loss controlling agent for cement compositions must be used in order to limit the loss of intersticial water from the slurry into and through the pores of the formation. Examples of the prior art concerning this subject and describing the two main classes of chemical agents for controlling fluid loss from cement compositions are the following U.S. patents: 3 234 154, 3 483 007, 3 491 049, and 4 258 790.

Considerable progress has been made by the additives described in French patent application No 8301369 filed January 28th, 1983 by the present Applicant.

According to this document, excellent fluid loss controlling agents are obtained by heat treating aqueous solutions containing acrylic terpolymers in the presence of an acid.

These terpolymers are described in U.S. Patent 4 048 077 for a different application, namely for drilling muds.

The teaching of the above-mentioned French patent application is outlined below in greater detail, and the person skilled in the art may obtain full details by referring to that document.

Stated briefly, the fluid loss control additives for cement compositions described in the above-mentionned French patent application are constituted by the product of heating, in the presence of at least one acid (and in particular hydrochloric or sulfuric acid), an aqueous solution of at least one terpolymer constituted by the following monomer moieties :

I.

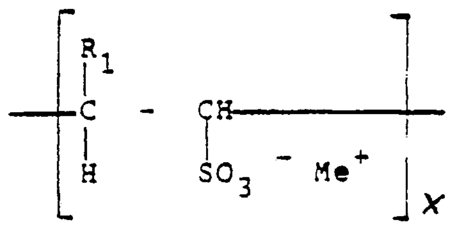

II.

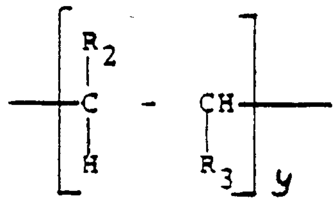

III.

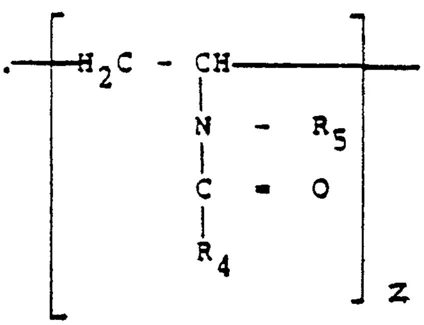

in which $R_1$ and $R_2$ represent H or $CH_3$, $R_3$ represents $CONH_2$, CN or $COOCH_3$, $R_4$ represents H, $CH_3$, or $C_2H_5$ and $R_5$ represents $CH_3$ or $C_2H_5$, or else $R_4$ and $R_5$ together constitute a propylene group which together with the NCO group form a pyrrolidone radical, with the $Me^+$ cation for compensating charge being chosen from $NH_4^+$, $K^+$, $Na^+$ and $Li^+$, and with the parts by weight x, y, z and of the initial monomers of formulas I, II, and III, respectively lying between 5 and 50, 25 and 92, and 3 and 70 respectively.

The above-mentioned compositions described in said French patent application generally give complete satisfaction when implemented in the field.

The effectiveness of these compositions was further improved in French patent application No 84-13788 filed September 7th, 1984 by the present Applicant. According to this further application, a secondary fluid loss control additive is added, with said additive being selected from the fluorides, and in particular NaF or KF.

However, fluid loss control is made even more complex by the concentration of salt(s) in the slurry, and in particuler by the concentration of sodium chloride. Some slurries are frequently prepared from sea water or even from highly concentrated brines. Heretofore, there has not been a "universal" fluid loss control agent which is capable of retaining its properties even in a very salty medium. Agents are known which are effective either in a salt-free medium or a medium which is only slightly salty, and which becomes ineffective in a highly salty medium, or else agents are provided for controlling fluid loss in a highly salty medium, e.g. certain cellulose derivatives, but it turns out that these agents are not really effective and/or that they confer undesirable properties to the slurry such as: very high viscosity, strongly retarded setting, or gelation of the slurry prior to setting.

Fluid loss control agents ("FLAC") used in the prior art include polymers such as alkyl-celluloses, polyvinyl alcohols, polyalkylene-imines,. or acrylic terpolymers associated with a dispersing agent.

When the medium is slightly salty (up to 18% BWOW [by weight of water] of NaCl)the dispersing agent may be a small proportion of an alcaline salt, and in particular of the sodium salt taken from the condensation product of formaldehyde and naphthalenesulfonic acid (hereinafter: "PNS").

Above 18% NaCl BWOW, PNS is described in the literature as provoking intense viscosification of the

slurry, which then becomes difficult or even impossible to pump (cf. accompanying Figures 2 and 3).

PNS is thus avoided for slurries containing more than 18 % NaCl BWOW(and it is then generally replaced by a high hydroxycarboxyl acid, which suffers from the severe drawbacks mentioned above with reference to very salty mediums).

In contrast, in accordance with the present invention a high concentration of PNS is used, even in a very salty medium, and it may optionally be used in combination with a low or a very low concentration of acrylic terpolymer treated as described in French patent applications numbers 83-01369 and 84-137788.

Excellent fluid loss control is thus obtained regardless of whether the medium is salt-free, slightly salty (sea water and brines having up to 18 % NaCl BWOW) or very salty (brines up to 37 % NaCl BWOW).

The PNS used may optionally include small quantities of soluble salts of transition metals, in particular $NiCl_2$, or $MgCl_2$, as a function of the mix water and of the nature of the cement (easy or difficult to disperse). It is remarkable that, although certain treated acrylic terpolymers were used in French patent applications numbers 83-01369 and 84-13788 as additives for providing the desired fluid loss control function, these additives are used, in accordance with the present invention, at very low concentrations, and may be omitted all together. Under such conditions they therefore no longer provide a fluid loss control function. It is believed that they act as dispersing agents at these concentrations.

In contrast, in accordance with the present invention the fluid loss control function is provided by PNS at high concentration.

This function is also completely original.

These fundamental change in the functions of the additives has been observed, but its mechanism has not been explained.

Another surprising aspect is that the fluid loss control with the agents in accordance with the invention improves with increasing salinity, which is the opposite of the prior knowledge of the persons skilled in this art.

Finally, this is the first "universal" fluid loss control agent.

Fluid loss control agents for a medium which is salt-free, which is of average salinity (18 % NaLi BWOW) or which is very saline (up to NaCl saturation) are essentially constituted by :

a) PNS (the sodium salt from the condensation product of formaldehyde and naphthalenesulfonic acid): about 35 to 71 liters (1) of a 40% by weight of water PNS solution per metric ton (t) of cement (i.e. about 1.75% to 3.50% solids BWOC (by weight of cement)); i.e. about 0.4 to 0.8 gallons of PNS solution per sack of cement;

and, optionally:

b) about 0 to 20 liters (1) of a solution containing 18% by weight of the above-described treated acrylic terpolymers per metric ton of cement (i.e. 0 to 0.22 gallons of terpolymer solution per sack of cement).

A preferred composition comprises :

- about 44 liters (1) of PNS solution per metric ton of cement, and;
- about 13 liters (1) of acrylic terpolymer solution per metric ton of cement.

Suitable slurries have densities lying in the range of about 1.89 to 1.98 grams per cubic centimeter (g/cm3), i.e. 15.8 to 16.5 ppg.

Salt-free, average salinity, or highly saline cement slurries containing the above fluid loss control agents have a fluid loss of less than 150 ml per half hour (ml/30 min), (measured according to API standard spec.10) while retaining excellent rheological properties.

The following examples illustrate the invention.

In all of the examples, a standard quantity of anti-foaming agent was added, this quantity was 4.44 1/t of cement i.e. liters per metric ton) which is equivalent to 0.05 gals/sk of cement.

**Example 1:**

Accompanying Figure 1 is a graph showing the change in fluid loss as a function of the concentration of PNS, of the concentration of treated acrylic terpolymers, and of temperature.

The mix water contains 30% NaCl BWOW (by weight of water).

Curve (a) : 85° C (185° F)

DYCKERHOFF® class G "Gulf" (tropical variety) cement

+ PNS alone (see curve).

Curve (b) : 85° C (185° F)

DYCKERHOFF class G "Gulf" cement

+ 13 liters of terpolymer/metric ton of cement

(i.e. 0.15 gals/sk of cement)

+ PNS (see curve).

Curve (c) : 25° C (77 F)

DYCKERHOFF class G "Gulf" cement

+ 13 liters of terpolymer/metric ton of cement

(i.e. 0.15 gals/sk of cement)

+ PNS (see curve)

Curve (d) : 25° C (77 F)

DYCKERHOFF class G "Gulf" cement

+ PNS (see curve) along.

**Example 2** : Fluid loss as a function of temperature.

Composition : Class G "Gulf" DYCKERHOFF cement;

Distilled water 44% BWOC (by weight of cement)

NaCl 30% BWO (by weight of water)

PNS 53.3 l/t of cement

(i.e. 0.6 gals/sk of cement).

Fluid loss was measured in accordance with the API standard after 20 minutes stirring and with a pressure difference of 1000 psi (70.3 kg/cm2):

| Temperature | | Fluid loss |
|---|---|---|
| (° C) | (° F) | (ml/30 min) |
| 25 | 77 | 7 |
| 45 | 113 | 24 |
| 65 | 149 | 50 |
| 85 | 185 | 253 |

The teaching of examples 1 and 2 is that PNS can be used on its own at low temperature (up to about 70° C (158° F), and that at temperatures of more than about 80° C (i.e.> 176° F) it is essential to use PNS in combination with treated terpolymer.

**Example 3** :

Fluid loss as a function of salt concentration Composition : Class G "Gulf" DYCKERHOFF cement ;

Distilled water 44/5 BWOC

NaCl 30% or 37% BWOW

PNS 53.5 l/t of cement

(i.e. 0.6 gals/sk).

Temperature 25 or 85° C

77 or 185° F.

Measurements performed in accordance with the API standard after 20 minutes stirring and with a pressure difference of 1000 psi (70.3 kg/$cm^2$) :

| % NaCl | Temperature | | Fluid loss |
|---|---|---|---|
| (BWOW) | (° C) | (° F) | (ml/30 min) |
| 30 | 25 | 77 | 7 |
| 37 | 25 | 77 | 6 |
| 30 | 85 | 185 | 253 |
| 37 | 85 | 185 | 162 |

In the presence of a high concentration of NaCl (37%), PNS may be used on its own as a fluid loss control agent up to at least 85° C (185° F).

Example 4: Rheology; influence of % NaCl.

A) Shear vied value

Reference is made to accompanying Figure 2.

Composition: Class G "Gulf" DYCKERHOFF cement;
Water containing x% NaCl BWOL (by weight of liquid)
Curve (a): x = 30% NaCl BWOL;
Curve (b): x = 18% NaCl BWOL;
Curve (c): x = 0% NaCl;
Test to 25°C (77°F).
Zone I: prior art
Zone II: invention

B) Plastic viscosity

Reference is made to accompanying Figure 3.

Composition: Class G "Gulf" DYCKERHOFF cement;
Water containing x% NaCl BWOL (by weight of liquid)
Curve (a): x = 30% NaCl BWOL;
Curve (b): x = 18% Nacl BWOL;
Curve (c): x = 0% Nacl;
Test to 25°C (77°F).
Zone I: prior art
Zone II: invention

One of the interesting features of Figures 2 and 3 is to show why PNS was only used at low concentration in the prior art, and was not used when the concentration of NaCl was too high [curves(a)]: there exists a zone III of PNS concentration (situated between zones I and II) in which the shear yield values (YV) and the plastic viscocity values (PV) are extremely unfavorable.

Example 5: Combination of PNS + treated acrylic terpolymers.

Composition: Class G "Gulf" DYCKERHOFF cement;
Distilled water 44% BWOC;
NaCl 30% BWOW;
20 minutes stirring (API standard, spec, 10).

The results are brought together in the following table.

TABLE

| No | Temperature | | Terpolymer | | PNS | |
|---|---|---|---|---|---|---|
| | °C | °F | l/t | gals/sk | l/t | gals/sk |
| 1 | 25 | 77 | -- | -- | -- | -- |
| 2 | 25 | 77 | -- | -- | 17.8 | 0.2 |
| 3 | 25 | 77 | -- | -- | 35.5 | 0.4 |
| 4 | 25 | 77 | -- | -- | 44.4 | 0.5 |
| 5 | 25 | 77 | -- | -- | 53.2 | 0.6 |
| 6 | 25 | 77 | -- | -- | 71.0 | 0.8 |
| 7 | 25 | 77 | 13.3 | 0.15 | -- | -- |
| 8 | 25 | 77 | 13.3 | 0.15 | 17.8 | 0.2 |
| 9 | 25 | 77 | 13.3 | 0.15 | 35.5 | 0.4 |
| 10 | 25 | 77 | 13.3 | 0.15 | 44.4 | 0.5 |
| 11 | 25 | 77 | 13.3 | 0.15 | 53.2 | 0.6 |
| 12 | 25 | 77 | 13.3 | 0.15 | 71.0 | 0.8 |
| 13 | 85 | 185 | -- | -- | -- | -- |
| 14 | 85 | 185 | -- | -- | 17.8 | 0.2 |
| 15 | 85 | 185 | -- | -- | 35.5 | 0.4 |
| 16 | 85 | 185 | -- | -- | 44.4 | 0.5 |
| 17 | 85 | 185 | -- | -- | 53.2 | 0.6 |
| 18 | 85 | 185 | -- | -- | 71.0 | 0.8 |
| 19 | 85 | 185 | 13.3 | 0.15 | -- | -- |
| 20 | 85 | 185 | 13.3 | 0.15 | 17.8 | 0.2 |
| 21 | 85 | 185 | 13.3 | 0.15 | 35.5 | 0.4 |
| 22 | 85 | 185 | 13.3 | 0.15 | 44.4 | 0.5 |
| 23 | 85 | 185 | 13.3 | 0.15 | 53.2 | 0.6 |
| 24 | 85 | 185 | 13.3 | 0.15 | 71.0 | 0.8 |

TABLE (Continued)

| No | Fluid loss | Free water | YV | | P.V |
|---|---|---|---|---|---|
| | ml/30 min. | ml | * | ** | CP |
| 1 | 1500 | 3 | 11 | 5.3 | 29.7 |
| 2 | 570 | 0.5 | 2.3 | 1.1 | 32.8 |
| 3 | 212 | 0 | - 2.4 | - 1.1 | 38 |
| 4 | 20 | 0 | - 3.6 | - 1.72 | 41.7 |
| 5 | 7 | 0 | - 1.8 | - 0,86 | 40.4 |
| 6 | 7 | 0 | - 2.7 | - 1.3 | 43 |
| 7 | 1450 | 1.5 | 32 | 15.3 | 93 |
| 8 | 482 | 0 | 12 | 5,7 | 64 |
| 9 | 341 | 0 | 4 | 1.9 | 83 |
| 10 | 56 | 0 | 4 | 1.9 | 86 |
| 11 | 34 | 0 | 4 | 1.9 | 85 |
| 12 | 14 | 0 | 3 | 1.4 | 83 |
| 13 | 1870 | 2.5 | 13.2 | 6.3 | 21 |
| 14 | 388 | 0.5 | 22 | 10.5 | 18 |
| 15 | 379 | 0 | 3.9 | 1.8 | 26 |
| 16 | 256 | 0 | 5.6 | 2.7 | 27 |
| 17 | 253 | 0 | 5.2 | 2.5 | 26 |
| 18 | 241 | 0 | 3.8 | 1.8 | 25 |
| 19 | 708 | 3.5 | 11 | 5.3 | 20 |
| 20 | 135 | 0 | 5 | 2.4 | 49 |
| 21 | 182 | 0 | 11 | 5.3 | 37 |
| 22 | 380 | 0 | 12 | 5.7 | 38 |
| 23 | 158 | 0 | 14 | 6.7 | 42 |
| 24 | 270 | 0 | 16 | 7.6 | 45 |

* = pounds/100 sq.ft; ** = Pa;
= yield value; P.V. = Plastic viscosity

## Claims

1. Cement slurry composition, being salt-free, of average salinity, or very saline, characterized in that it comprises as fluid loss control agent 35 to 71 liters of 40% by weight PNS solution per metric ton of cement, "PNS" being a sodium salt from the condensation product of formaldehyde and naphthalenesulfonic acid,
optionally combined with a low concentration of treated terpolymer constituted by the product of heat treatment in the presence of at least one acid of an aqueous solution of at least one terpolymer constituted by the following monomer moieties :

I

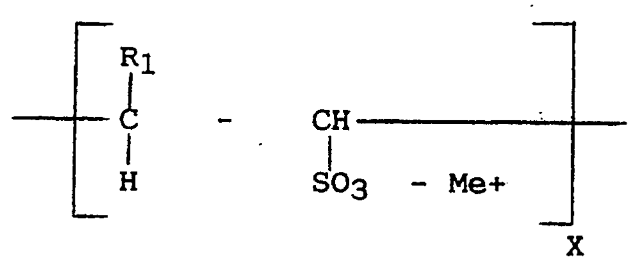

II

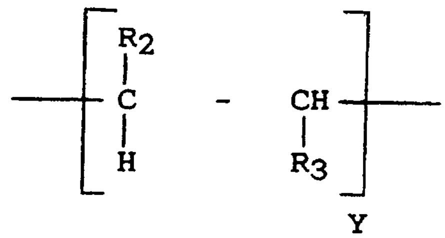

III

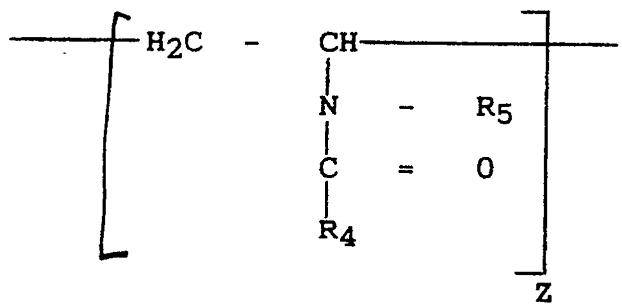

in which $R_1$ and $R_2$ represent H or $CH_3$, $R_3$ represents $CONH_2$, CN or $COOCH_3$, $R_4$ represents H, $CH_3$ or $C_2H_5$ and $R_5$ represents $CH_3$ or $C_2H_5$, or else $R_4$ together constitute a propylene group which together with the NCO group form a pyrrolidone radical, with the Me+ cation for compensating charge being chosen from $NH_4+$, K+, Na+ and Li+, and with the parts by weight x, y and z of the initial monomers of formulas I, II, and III, respectively, lying between 5 and 50, 25 and 92, and 3 and 70, respectively.

**2.** Cement slurry composition according to claim 1, characterized in that it additionally contains a low concentration of $NiCl_2$ by weight of the PNS solution used.

**3.** Cement slurry composition according to claim 1 or 2; characterized in that it additionally contains NaF or KF.

**4.** Cement slurry composition according to anyone of claims 1 to 3, characterized in that it comprises as fluid loss control agent :
35 to 71 liters of a 40% by weight PNS solution per metric ton of cement ; and
0 to 20 liters of a solution containing 18% by weight of treated acrylic terpolymers as defined in claim 1 per metric ton of cement.

**5.** Cement slurry composition according to claim 4, characterized in that it comprises as fluid loss control agent :
44 l of a 40% by weight PNS solution per metric ton of cement ; and
13 l of a solution containing 18% by weight of treated acrylic terpolymers as defined in claim 1 per metric ton of cement.

**6.** Well cement slurries characterized in that they contain a fluid loss control agent as defined in anyone of claim 1 to 5.

**7.** A method of cementing an oil, gaz, geothermal or similar well, the method being characterized in that it consists in injecting a cement slurry according to claim 6 into the well annulus.

## Revendications

1. Composition de lait de ciment à teneur en sels nulle, moyenne ou forte, caractérisée en ce qu'elle contient, comme réducteur de perte de fluide, de 35 à 71 litres d'une solution à 40 % en poids de PNS par tonne de ciment, l'abréviation "PNS" désignant un sel de sodium d'un produit de condensation du formaldéhyde et d'un acide naphtalène-sulfonique, éventuellement associée à un terpolymère traité, présent en une faible concentration, qui est constitué par le produit résultant d'un traitement à chaud, en présence d'au moins un acide, d'une solution aqueuse d'au moins un terpolymère constitué des motifs monomères suivants :

I
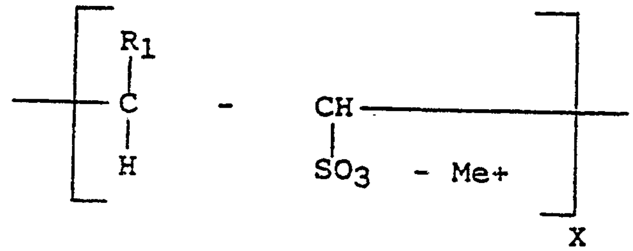

II
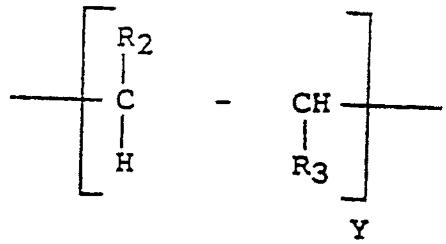

III
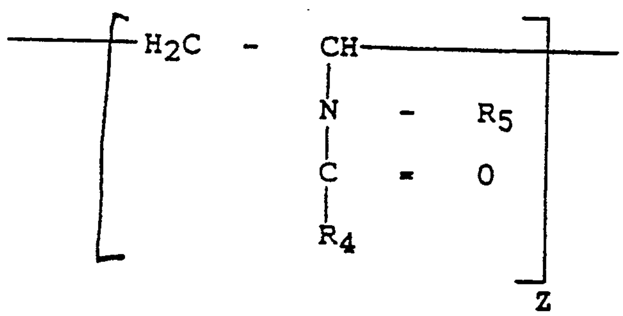

dans lesquels

| | |
|---|---|
| $R_1$ et $R_2$ | représentent H ou $CH_3$, |
| $R_3$ | représente $CONH_2$, CN ou $COOCH_3$, |
| $R_4$ | représente H, $CH_3$ ou $C_2H_5$, |
| $R_5$ | représente $CH_3$ ou $C_2H_5$, ou |
| $R_4$ et $R_5$ | forment ensemble un radical propylène qui, avec le radical NCO, forme un radical de pyrrolidone, et |
| $Me^+$ | représente un cation compensateur de charge qui est choisi dans l'ensemble constitué par $NH_4+$, $K+$, $Na+$ et $Li+$, |

les quantités x, y et z des monomères initiaux de formules I, II et III, en parties en poids, étant comprises respectivement entre 5 et 50, 25 et 92, et 3 et 70.

2. Composition de lait de ciment selon la revendication 1, caractérisée en ce qu'elle contient en outre du $NiCl_2$ en une faible concentration en poids par rapport à la solution de PNS utilisée.

3. Composition de lait de ciment selon l'une des revendications 1 et 2, caractérisée en ce qu'elle contient en outre NaF ou KF.

4. Composition de lait de ciment selon l'une quelconque des revendications 1 à 3, caractérisée en ce qu'elle contient comme réducteur de perte de fluide :

de 35 à 71 litres d'une solution à 40 % en poids de PNS par tonne de ciment, et
de 0 à 20 litres d'une solution contenant 18 % en poids de terpolymères acryliques traités tels que définis dans la revendication 1, par tonne de ciment.

5. Composition de lait de ciment selon la revendication 4, caractérisée en ce qu'elle contient comme réducteur de perte de fluide :
44 litres d'une solution à 40 % en poids de PNS, par tonne de ciment, et
13 litres d'une solution contenant 18 % en poids de terpolymères acryliques traités tels que définis dans la revendication 1, par tonne de ciment.

6. Laits de ciment pour puits caractérisés en ce qu'ils contiennent un réducteur de perte de fluide tel que défini dans l'une quelconque des revendications 1 à 5.

7. Procédé pour cimenter un puits de pétrole, un puits de gaz, un puits géothermique ou un puits de type similaire, procédé caractérisé en ce qu'on injecte, dans l'espace annulaire du puits, un lait de ciment selon la revendication 6.

**Patentansprüche**

1. Zusammensetzung einer Zementaufschlämmung, die salzfrei ist, einen mittleren Salzgehalt hat oder sehr salzhaltig ist, **dadurch gekennzeichnet,** daß sie als Flüssigkeitsverlust-Kontrollmittel 35 bis 71 Liter einer 40 Gew.-%igen PNS-Lösung pro metrische Tonne Zement enthält, wobei "PNS" das Natriumsalz des Kondensationsprodukts von Formaldehyd und Naphthalinsulfonsäure ist,
gegebenenfalls in Kombination mit einer geringen Konzentration an behandeltem Terpolymer, das aus dem Produkt einer Hitzebehandlung in Gegenwart von mindestens einer Säure einer wäßrigen Lösung von mindestens einem Terpolymer zusammengesetzt ist, das die folgenden monomeren Gruppen enthält:

I 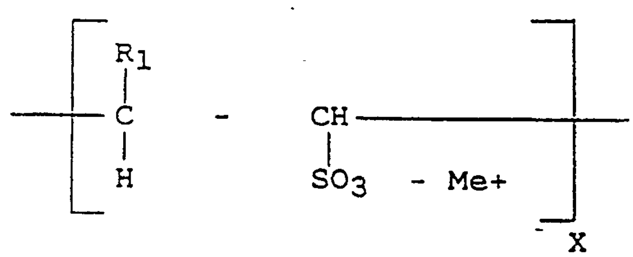

II 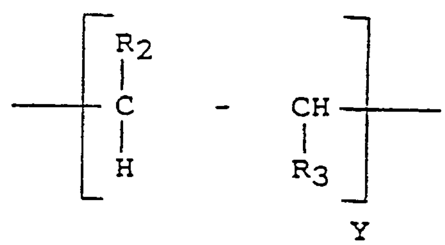

III 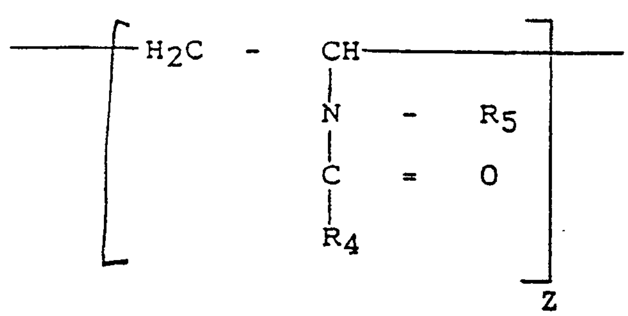

worin $R_1$ und $R_2$ H oder $CH_3$ darstellen, $R_3$ $CONH_2$, CN oder $COOCH_3$ darstellt, $R_4$ H, $CH_3$ oder $C_2H_5$ darstellt und $R_5$ $CH_3$ oder $C_2H_5$ darstellt oder mit $R_4$ zusammen eine Propylengruppe bildet, die zusammen mit der NCO Gruppe einen Pyrrolidonrest bildet, wobei das $Me^+$ Kation zum Ladungsaus-

gleich aus $NH_4^+$, $K^+$, $Na^+$ und $Li^+$ ausgewählt wird, und wobei die Gewichtsteile x, y und z der Ausgangsmonomere der Formeln I, II bzw. III zwischen 5 und 50, 25 und 92 bzw. 3 und 70 liegen.

2. Zusammensetzung einer Zementaufschlammung nach Anspruch 1, **dadurch gekennzeichnet,** daß sie zusätzlich eine geringe Konzentration an $NiCl_2$ bezogen auf das Gewicht der verwendeten PNS-Lösung enthält.

3. Zementaufschlämmungszusammensetzung nach Anspruch 1 oder 2, **dadurch gekennzeichnet,** daß sie zusätzlich NaF oder KF enthält.

4. Zementaufschlämmungszusammensetzung nach einem der Ansprüche 1 bis 3, **dadurch gekennzeichnet,** daß sie als Flüssigkeitsverlust-Kontrollmittel enthält:
35 bis 71 Liter einer 40 Gew.-%igen PNS-Lösung pro metrische Tonne Zement und
0 bis 20 Liter einer Lösung, die 18 Gew.-% von behandelten acrylischen Terpolymeren, wie in Anspruch 1 definiert, pro metrische Tonne Zement enthält.

5. Zementaufschlämmungszusammensetzung nach Anspruch 4, **dadurch gekennzeichnet,** daß sie als Flüssigkeitsverlust-Kontrollmittel enthält:
44 l einer 40 Gew.-%igen PNS-Lösung pro metrische Tonne Zement und 13 l einer Lösung, die 18 Gew.-% von behandelten acrylischen Terpolymeren, wie in Anspruch 1 definiert, pro metrische Tonne Zement enthält.

6. Bohrlochzementaufschlämmungen, **dadurch gekennzeichnet,** daß sie ein Flüssigkeitsverlust-Kontrollmittel, wie in einem der Ansprüche 1 bis 5 definiert, enthalten.

7. Verfahren zur Zementierung eines Öl-, Gas-, Geothermal- oder eines ähnlichen Bohrlochs, wobei das Verfahren **dadurch gekennzeichnet** ist, daß es aus einem Einspritzen einer Zementaufschlämmung nach Anspruch 6 in den Mund des Bohrlochs besteht.

FIGURE 1

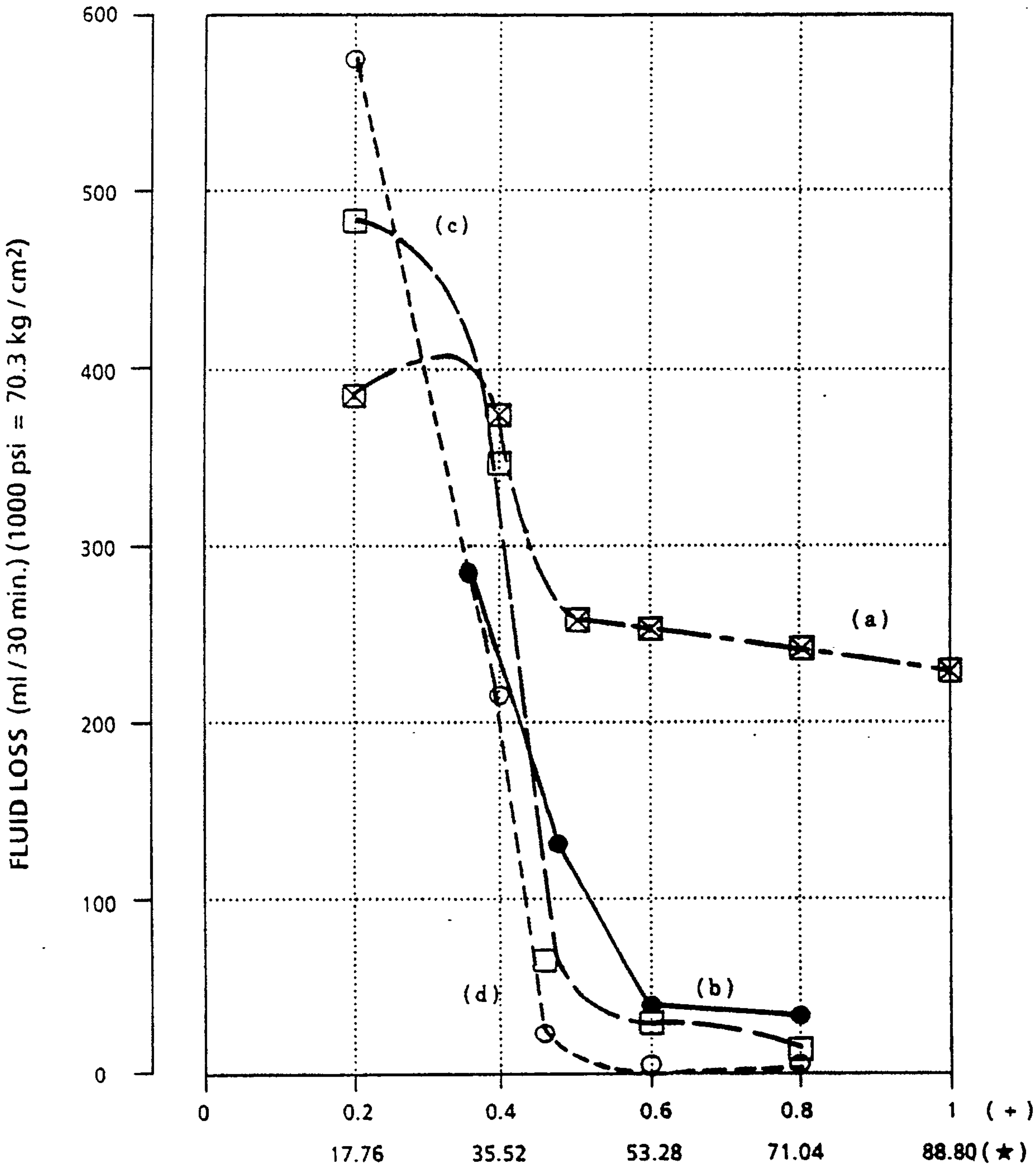


(+) = gals / sk of cement
(★) = l / metric ton of cement

PNS

FIGURE 2

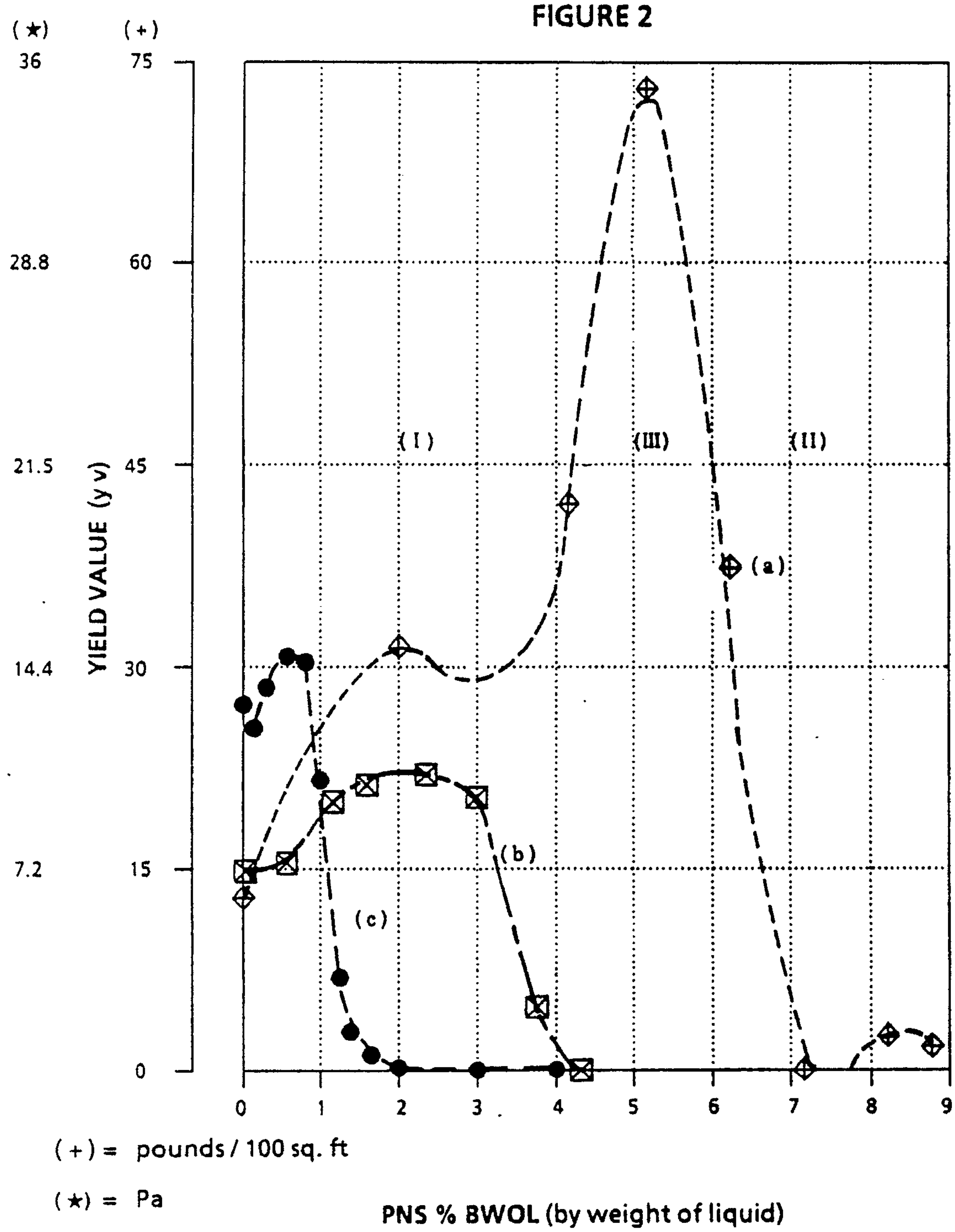
(★)
(+)
36
75
28.8
60
21.5
45
14.4
30
7.2
15
0
YIELD VALUE (y v)
(I)
(III)
(II)
(a)
(b)
(c)
0
1
2
3
4
5
6
7
8
9
(+) = pounds / 100 sq. ft
(★) = Pa
PNS % BWOL (by weight of liquid)

FIGURE 3

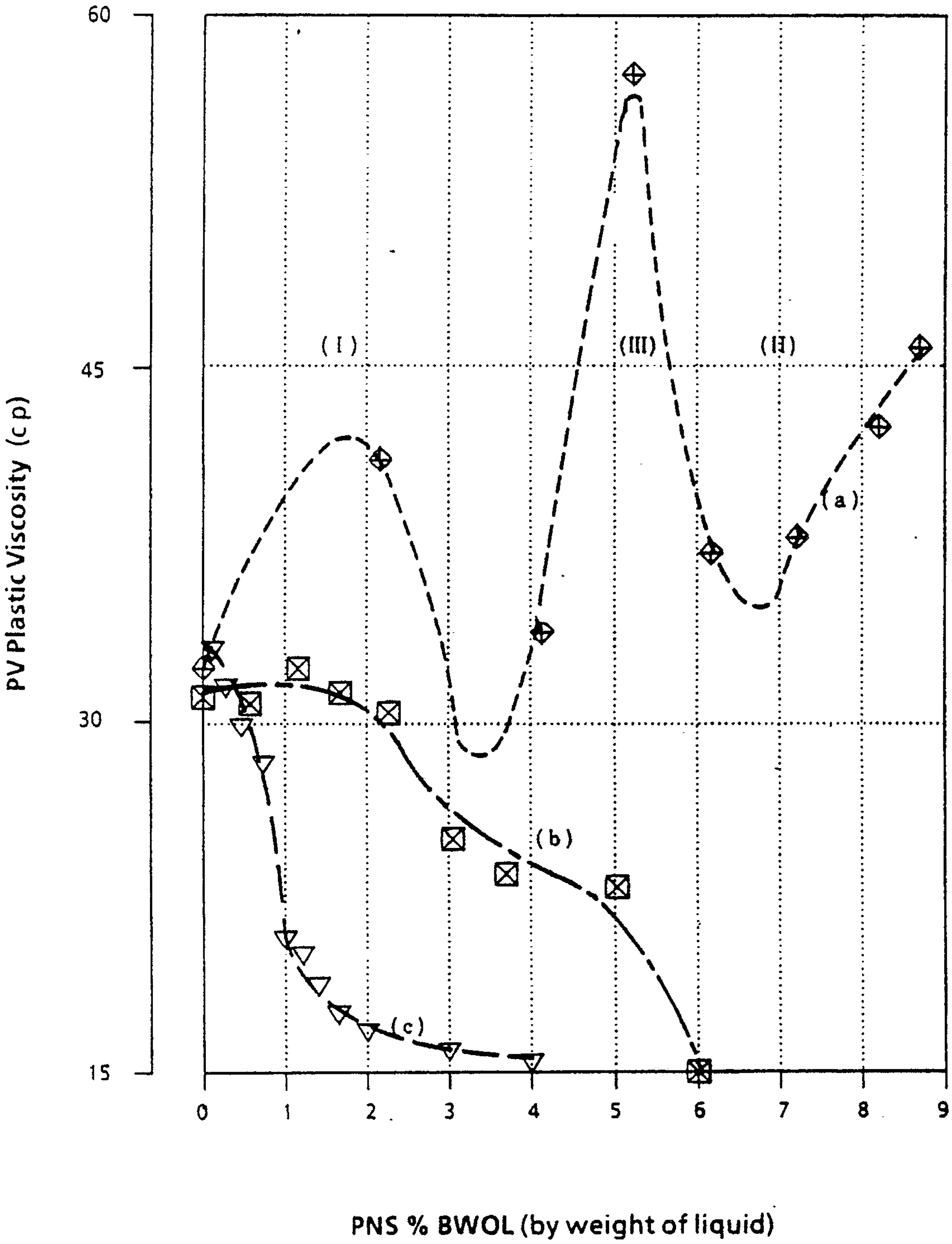
60
45
30
15
PV Plastic Viscosity (c p)
(I)
(III)
(II)
(a)
(b)
(c)
0
1
2
3
4
5
6
7
8
9
PNS % BWOL (by weight of liquid)